# EUROPEAN PATENT APPLICATION

(11) **EP 4 579 883 A1**
(43) Date of publication of application: **02.07.2025**
(21) Application number: 23307387.3
(22) Date of filing: 26.12.2023
(51) Int. Cl.: H01M 10/653

(54) **BATTERY MODULE WITH LIMITED RISKS OF THERMAL RUNAWAY**

(71) Applicant: Automotive Cells Company SE, 33520 Bruges (FR)
(72) Inventor: DESPREZ, Philippe, 33200 BORDEAUX (FR); SIBONI, Laurent, 33160 ST-MEDARD EN JALLES (FR); ALI, Sikandar, 33320 EYSINES (FR)
(74) Representative: Lavoix

(57) **Abstract**

The battery module (10) comprises a plurality of cells (12) aligned in an alignment direction (X), the plurality of cells comprising two end cells (12A) and intermediate cells aligned between the end cells (12A) in the alignment direction (X), each cell (12) being separated from adjacent cells by respective insulating walls (28), the battery module (10) also comprising two lateral walls (14a, 14b). Each end cell (12A) is separated from at least one of the two lateral walls (14a, 14b) by a high conductive layer (34), the cells (12) being separated from the same lateral wall by an insulating layer (32) or a high conductive layer (34), by alternating from a conductive layer (34) and an insulating layer (32) from any cell (12) to adjacent cells (12).

## Description

The present invention relates to a battery module with limited risks of thermal runaway.

A battery module is already known from prior art, comprising a plurality of cells connected in series.

The battery's safety and stability depend on maintaining internal temperatures within specific limits. If the temperature exceeds the critical level on either end, thermal runaway can occur, destroying the battery or, even worse, starting a fire.

Thermal runaway is a chain reaction within a battery that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat.

In thermal runaway, the battery cell temperature rises incredibly fast (milliseconds). The energy stored in that battery is released very suddenly. This chain reaction creates extremely high temperatures (around 752 degrees Fahrenheit / 400 degrees Celsius). These temperatures can cause gassing of the battery and a fire that is so hot it can be nearly impossible to extinguish.

Thus, protecting the battery against thermal runaway is an essential safety feature.

The invention is intended to reduce the risks of a thermal runaway.

To this end, the invention relates to a battery module, comprising a plurality of cells aligned in an alignment direction, the plurality of cells comprising two end cells and intermediate cells aligned between the end cells in the alignment direction, each cell being separated from adjacent cells by respective insulating walls, the battery module also comprising two lateral walls, characterized in that each end cell is separated from at least one of the two lateral walls by a high conductive layer, the cells being separated from the same lateral wall by an insulating layer or a high conductive layer, by alternating from a conductive layer and an insulating layer from any cell to adjacent cells.

The idea of invention is to add alternative layers of thermal insulating layers and high conductive material layers between sides of the battery module and lateral walls. This arrangement limits the heat generated during thermal runaway to transfer from one cell to an adjacent cell via sides, since the insulation layers are arranged alternatively, and it helps to carry some part of heat from one cell to a distant cell since the conductive material layers are arranged alternatively as well.

A battery module according to the invention may comprises at least one of the following features, taken alone or in any possible combination.
- Each cell is separated from one of the two lateral walls by an insulating layer, and is separated from the other of the two lateral walls by a high conductive layer, the cells having the insulating layer and the high conductive layer on sides that alternate from one cell to each adjacent cell.
- Each cell is separated from the two lateral walls by a same layer on both sides, chosen between insulating layers or conductive layers, each cell having insulating layers on both sides alternating with cells having conductive layers on both sides.
- Each insulating wall comprises a mechanical foam between two sheets of fire resistant material, for example sheet of ceramics.
- Each insulating wall has a thickness inferior than 3 mm, more preferentially inferior than 2.5 mm, for example of 2.4 mm.
- Each conductive layer and insulating layer has substantially a thickness of 2 mm.

Several aspects and advantages of the invention will be disclosed in the following disclosure, only given as a non limitative example and made in reference to figures in which:
- Figure 1 is a perspective view of a battery module according to a first example of embodiment,
- Figure 2 is a schematic partial view from above of the battery module of Figure 1,
- Figure 3 is a view similar as Figure 2 of a battery module according to a second example of embodiment.

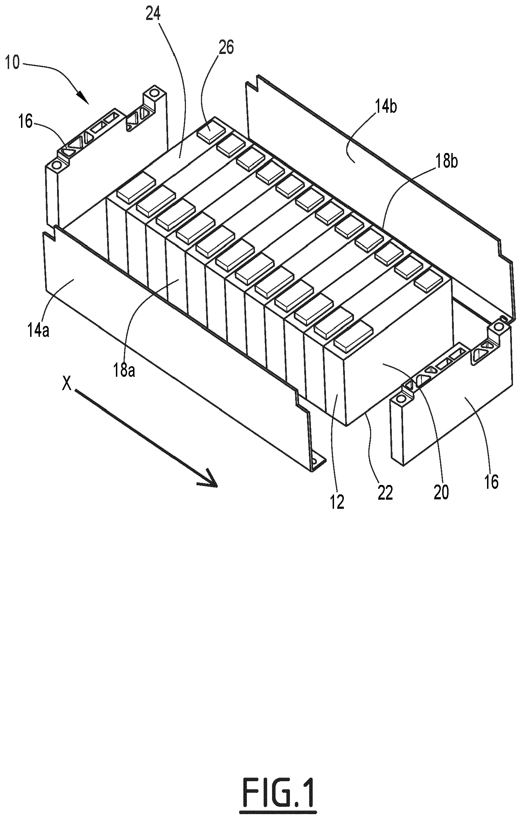

Figure 1 shows a battery module 10 according to a first embodiment, comprising cells 12 aligned in an alignment direction X, lateral walls (more particularly a first lateral wall 14a and a second lateral wall 14b), and end walls 16.

Each cell 12 comprises side faces 18a, 18b, more particularly a first side face 18a in front of the first lateral wall 14a and a second side face 18b in front of the second lateral wall 14b.

Each cell 12 also comprises main faces 20 that are perpendicular to the alignment direction X, a lower face 22 and an upper face 24. The upper face 24 comprises terminals 26. The cells 12 are usually connected in series via their terminals.

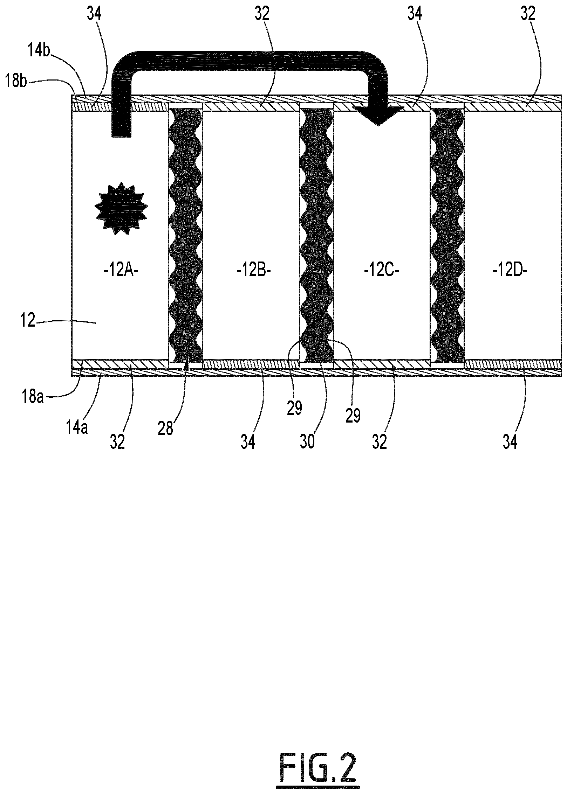

Each cell 12 is separated from adjacent cells by an insulating wall 28, shown on figure 2.

Each insulating wall 28 classically includes a mechanical foam 29 interposed between two fire resistant material sheets 30 (for example ceramics). Preferentially, each insulating wall 28 has a thickness inferior than 3 mm, more preferentially inferior than 2.5 mm, for example of 2.4 mm.

Figure 2 shows this alternation on four successive cells 12, designed with references 12A, 12B, 12C and 12D.

The cell 12A is an end cell, adjacent to an end wall 16.

According to the invention, each end cell 12A is separated from at least one of the two lateral walls 14a, 14b by a high conductive layer 34, the cells 12 being separated from the same lateral wall by an insulating layer 32 or a high conductive layer 34, by alternating from a conductive layer 34 and an insulating layer 32 from any cell 12 to adjacent cells 12.

As shown on Figure 2, each cell 12 is separated from one of the two lateral walls 18a, 18b by an insulating layer 32, and is separated from the other of the two lateral walls 18a 18b by a high conductive layer 34.

The cells 12 have the insulating layer 32 and the high conductive layer 34 on sides that alternate from one cell to each adjacent cell.

In other words, when a cell 12 has the insulating layer on the first side 18a, then the adjacent cells have the conductive layer 32 on their first sides 18a, and since the cell 12 has the conductive layer 34 on the second side 18b, then the adjacent cells have the insulating layer 34 on their second sides 18b.

In the same manner, when a cell 12 has the insulating layer on the second side 18b, then the adjacent cells have the conductive layer 32 on their second sides 18b, and since the cell 12 has the conductive layer 34 on the first side 18a, then the adjacent cells have the insulating layer 32 on their first sides 18a.

In case of thermal runaway starting from the cell 12A, a part of the heat is transferred to the adjacent cell 12B through the insulating wall 28, in a classical way. However, because of the alternate of conductive layer 34 and insulating layer 32, another part of the heat is transferred to the next cell 12C instead of being transferred to the adjacent cell 12B.

Indead, since the end cell 12A has, on one side, an insulating layer 32, and on the another side, a conductive layer 34, heat evacuates via the side having the conductive layer 34. Since the adjacent cell 12B has an insulating layer 32 on this same side, heat is not transferred to this adjacent cell 12B by this side. Heat is transferred to the next cell 12C having a conductive layer 34 on this side.

This should be compared with a battery module from prior art, where all the heat is transferred from the end cell to the adjacent cell by both sides and through the insulating wall 28, involving a quick overheating of the adjacent cell, with the heat then transferred to the next cell in the same manner, etc. This chain of overheating causes the thermal runaway.

In the invention, a part of the heat is transferred to the adjacent cell, and another part of the heat is transferred to the next cell. Consequently, there is no overheating of the adjacent cell 12B, so the risks of a thermal runaway is limited.

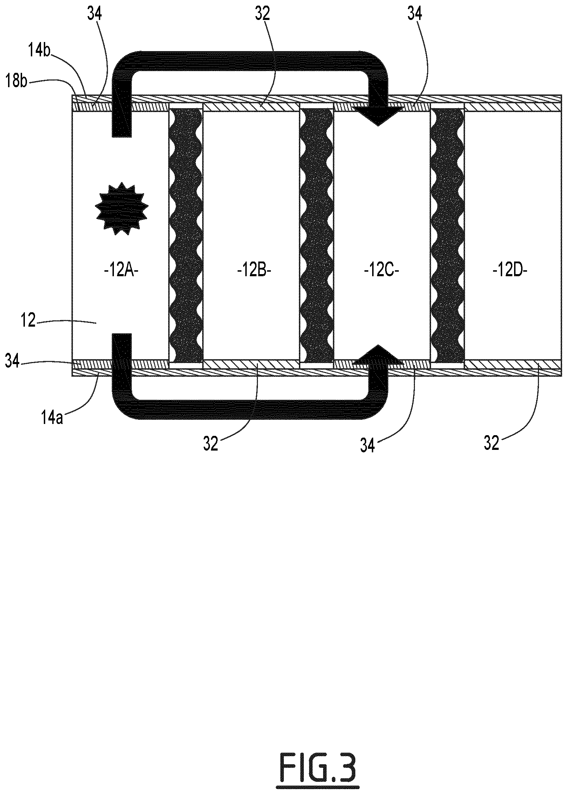

A second embodiment is shown on Figure 3.

According to this second embodiment, each cell 12 is separated from the two lateral walls 14a, 14b by a same layer on both sides, chosen between insulating layers 32 or conductive layers 34, each cell 12 having insulating layers 32 on both sides alternating with cells 12 having conductive layers 34 on both sides.

In such a configuration, the end cells 12A necessarily comprises conductive layers 34 on both sides. Thus, the adjacent cell 12B has insulating layers 32 on both sides. The next cell 12C has conductive layers 34 on both sides, etc.

In this case, the part of heat transferred to the next cell 12C is transferred via the two sides.

This configuration could be preferred when the battery module 10 has an odd number of cells, so that both end cells 12A comprise conductive layers 34 on both sides.

When the battery module 10 has an even number of cells 12, the first embodiment could be preferred, with the end cells 12A having the conductive layer 34 on different sides.

## Claims

1. Battery module (10), comprising a plurality of cells (12) aligned in an alignment direction (X), the plurality of cells comprising two end cells (12A) and intermediate cells aligned between the end cells (12A) in the alignment direction (X), each cell (12) being separated from adjacent cells by respective insulating walls (28), the battery module (10) also comprising two lateral walls (14a, 14b), **characterized in that** each end cell (12A) is separated from at least one of the two lateral walls (14a, 14b) by a high conductive layer (34), the cells (12) being separated from the same lateral wall by an insulating layer (32) or a high conductive layer (34), by alternating from a conductive layer (34) and an insulating layer (32) from any cell (12) to adjacent cells (12).

2. Battery module (10) according to claim 1, wherein each cell (12) is separated from one of the two lateral walls (14a, 14b) by an insulating layer (32), and is separated from the other of the two lateral walls (14a, 14b) by a high conductive layer (34), the cells (12) having the insulating layer (32) and the high conductive layer (34) on sides that alternate from one cell to each adjacent cell.

3. Battery module (10) according to claim 1, wherein each cell (12) is separated from the two lateral walls (14a, 14b) by a same layer on both sides, chosen between insulating layers (32) or conductive layers (34), each cell (12) having insulating layers (32) on both sides alternating with cells (12) having conductive layers (34) on both sides.

4. Battery module (10) according to any of claims 1 to 3, wherein each insulating wall comprises a mechanical foam (30) between two sheets (29) of fire resistant material, for example sheet of ceramics.

5. Battery module (10) according to any of preceding claims, wherein each insulating wall (28) has a thickness inferior than 3 mm, more preferentially inferior than 2.5 mm, for example of 2.4 mm.

6. Battery module (10) according to any of preceding claims, wherein each conductive layer (34) and insulating layer (32) has substantially a thickness of 2 mm.
